# EUROPEAN PATENT APPLICATION

(11) **EP 3 392 989 A1**
(43) Date of publication of application: **24.10.2018**
(21) Application number: 18168345.9
(22) Date of filing: 19.04.2018
(51) Int. Cl.: H02G 3/30

(54) **COMBINATION CABLE MOUNTING FIXTURE STRUCTURE**

(30) Priority: 21.04.2017 TW 106113524
(71) Applicant: Liu, Wen-Cheng, Taipei City 11685 (TW); Ortiz, Jerric Paul, 11685 Taipei City (TW)
(72) Inventor: Liu, Wen-Cheng, Taipei City 11685 (TW); Ortiz, Jerric Paul, 11685 Taipei City (TW)
(74) Representative: Lang, Christian

(57) **Abstract**

A combination cable mounting fixture structure, including plural cable units which are at least distinguished as first cable units, second cable units, and third cable units. The first cable unit can be selected to be fixed to a flat surface, each of the cable units is provided with at least one male head connecting portion, at least one female head connecting portion, or is provided with both a male head connecting portion and a female head connecting portion. The female (male) head connecting portion of the second cable unit is connected to the adjacent male (female) head connecting portion, and the female (male) head connecting portion of the third cable unit is connected to the adjacent male (female) head connecting portion. Further connections may be deduced accordingly, thereby enabling the cable units to mutually combine to form a parallel configuration, which composes the cable organizer structure.

## Description

### Technical Field

The present invention relates to a combination cable mounting fixture structure, and more specfically to act as a combination cable organizer design which is able to concurrently and conveniently join several cables to form an organized combination cable structure.

### Background Art

With the advancement of technology, a large number of consumer electronic products have appeared in people's lives, such as: mobile devices, laptops, computers, telephones, televisions, media players, home appliances, numerous electronic devices, and so on. The functions brought about by such consumer electronic products, including entertainment, communication, books, etc., provide people with considerable convenience. However, such consumer electronic products require a power supply cable to be connected to a wall power supply that provides the necessary charging power thereto. Furthermore, consumer electronic products such as speakers, in addition to requiring a power supply cable, they also require separate dedicated signal cables, in order to provide the audio data transmission to the audio output component such as speaker modules. The signal cables are divided between the left audio channel and the right audio channel to realize transmission of the sound source.

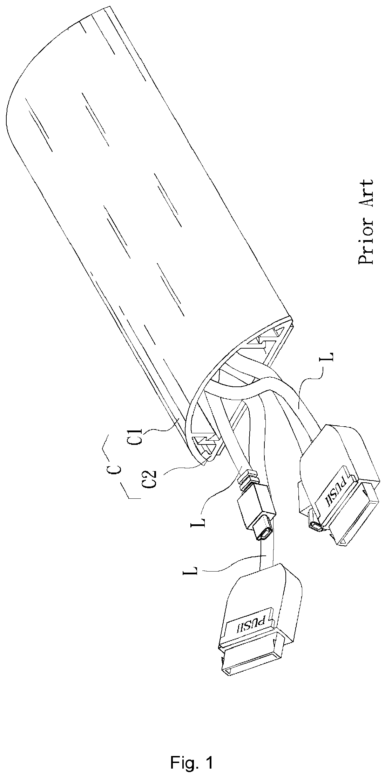

In order to organize numerous, disorderly and tangled prone power supply cables and signal cables of electronic products, the user generally uses a cable organizer C of the prior art to arrange cables L (see Figure 1). The cable organizer C is a combination type plastic casing, which is generally fabricated from plastic material and comprises: a first casing C1 and a second casing C2 (as shown in Figure 1). The first casing C1 and the second casing C2 mutually combine to form an integral body, and one side of the first casing C1 or the second casing C2 can be fixed to a position on a wall, floor, or a ceiling (not shown in the drawings).

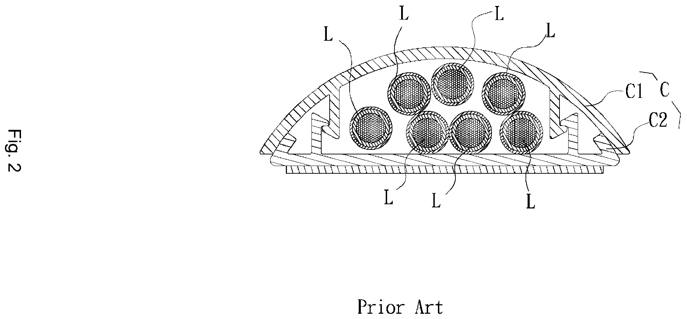

When the user wants to organize the cables L (power supply cables, signal cables, etc.), the cables L need only be placed in the interior of the first casing C1 or the second casing C2 of the cable organizer C, and the first casing C1 then mutually combined with the second casing C2 to form an integral body, thereby organizing the multiple cables L. Accordingly, this arrangement will minimize and or prevent the cables from any accidental interactions that can disrupt and or damage the electronic device's function that is connected to cables L, and at the same time achieves an aesthetic effect. However, the cable organizer C of the prior art has the following problems that remain to be solved:
1. No practicable organizing effectiveness: After the user has completely gathered up and sealed all the cables L within the cable organizer C, the cables L inside the cable organizer C have not been actually organized, and can only be said to have been forcefully gathered up within the narrow space of the cable organizer C (as shown in Figure 2). If before sealing up all the cables L inside the cable organizer C, all the cables L are originally in complete disorder, and the user directly seals up these completely disorderly cables L within the cable organizer C, then the cable organizer C only achieves the effect of covering up the cables L.
2. It is considerably cumbersome if the user needs to add additional cables to the number of cables L: Because all the cables L are already sealed up within the cable organizer C formed as an integral body from the first casing C1 mutually combined with the second casing C2, thus, when the user has added electronic products and has the need to install additional cables to the cables L, then the user needs to first completely disassemble the cable organizer C with all the cables L running therethrough, and after installing the additional cables to the already installed cables L within the cable organizer C, reassemble the first casing C1 and the second casing C2 of the cable organizer C; a procedure requiring much time and effort.
3. The aforementioned space produced between the first casing C1 and the second casing C2 is limited, thus, the cable organizer C is incapable of unlimited expansion in the number of the cables L, resulting in poor effectiveness of organizing cables.

Hence, it is the strong desire of the inventor of the present invention and manufacturers engaged in related art, as well as the purpose of the present invention to research, improve, and resolve the problems and shortcomings of the aforementioned prior art.

### Summary of invention

In light of the aforementioned shortcomings, the inventor of the present invention, having collected related data, and through evaluation and consideration from many aspects, as well as having accumulated years of experience in related arts, through continuous testing and improvements, has designed the present invention herein.

The object of the present invention lies in providing a combination cable mounting fixture structure that is able to efficiently organize cables, and at the same time enable a user to easily and conveniently install additional cables.

In order to achieve the aforementioned objects, in the combination cable mounting fixture structure of the present invention, the mounting structure comprises: a plurality of cable units, which are at least distinguished as first cable units, second cable units, and third cable units. The first cable unit is provided with at least one joining surface, and the joining surface can be used to fix to a flat surface or the fixing structure can be used without fixing to any surface. Each of the cable units is provided with at least a male head connecting portion, or at least one female head connecting portion, or is provided with both a male head connecting portion and a female head connecting portion. The female head connecting portion of the second cable unit is connected to the adjacent male head connecting portion of the first cable unit, and the female (male) head connecting portion of the third cable unit is connected to the adjacent male (female) head connecting portion of the second cable unit. Further connections may be deduced accordingly, thereby enabling the cable units to mutually form a parallel configuration and combine to form the cable organizer structure.

Accordingly, the aforementioned structure can be used to efficiently and conveniently organize cables in multiple cable units to form the cable organizer structure.

In a preferred embodiment of the present invention, the first cable unit is a cable organizer base.

In a preferred embodiment of the present invention, the second cable unit has an identical shape to that of the third cable unit.

In a preferred embodiment of the present invention, suitable surfaces for the flat surface include a horizontal surface, a vertical surface, an inclined surface, or a wall angle area.

In a preferred embodiment of the present invention, the interior of the cable units encloses a single or a plurality of power supply core cables, or signal transmission core cables.

In a preferred embodiment of the present invention, the male head connecting portion is a convex structure, and the female head connecting portion is a concave structure.

In a preferred embodiment of the present invention, the convex structure of the male head connecting portion is slightly larger (wider) than the entrance area of the concave structure of the female head connecting portion.

In a preferred embodiment of the present invention, the surface of the cable units can at the same time be provided with a plurality of the male head connecting portions and the female head connecting portions, or provided with a staggered configuration of the male and female connecting portions.

In a preferred embodiment of the present invention, the male head connecting portion is provided on the first cable unit or the second cable unit, moreover, the female head connecting portion is provided on the second cable unit or the first cable unit.

To enable a further understanding of said objectives and the technological methods of the invention herein, a brief description of the drawings is provided below followed by a detailed description of the preferred embodiments.

### Brief description of drawings

Figure 1 is an assembled three-dimensional schematic view of a cable organizer of the prior art.
Figure 2 is a cross-sectional assembled schematic view of the cable organizer of the prior art.
Figure 3 is an exploded three-dimensional view of a combination cable mounting fixture structure according to the present invention, which shows a first cable unit, a second cable unit, and a third cable unit.
Figure 4 is an assembled three-dimensional schematic view of the combination cable mounting fixture structure according to the present invention, which shows a plurality of the cable units assembled to form the cable organizer structure.
Figure 5 is another assembled three-dimensional schematic view of the combination cable mounting fixture structure according to the present invention, which shows a female head connecting portion of the second cable unit connected to an adjacent male head connecting portion of the first cable unit.
Figure 5A is a partial expanded schematic view according to portion A depicted in Figure 5.
Figure 5B is a partial expanded schematic view according to portion B depicted in Figure 5.
Figure 6 is another exploded elevational schematic view of the combination cable mounting fixture structure according to the present invention, which shows an adjacent area of a female head connecting portion of a cable unit provided with a male head connecting portion.
Figure 7 is an assembled three-dimensional schematic view of Figure 6, which shows a first cable unit and a second cable unit mutually combined to form a parallel configuration and assembled to form the cable organizer structure.
Figure 8 is a three-dimensional cross-sectional schematic view 1 of a first and a second cable unit of the combination cable mounting fixture structure according to the present invention, which shows the sides of the first cable unit provided with male head connecting portions, and the sides of the second cable unit with female head connecting portions.
Figure 9 is a three-dimensional cross-sectional schematic view 2 of a first and a second cable unit of the combination cable mounting fixture structure according to the present invention, which shows the first cable unit and the second cable unit provided with a staggered configuration of the male and female connecting portions.
Figure 10 is a cross-sectional schematic view 3 of a first or a second cable unit of the combination cable mounting fixture structure according to the present invention, which shows the two sides of the first cable unit and the second cable unit all configured with a male head connecting portion, moreover, the female head connecting portion is configured at an adjacent area of the male head connecting portion.

### Description of embodiments

In order to achieve the aforementioned objectives and effectiveness, a detailed description of the technological means adopted to achieve the aforementioned object and effectiveness are provided below together with the diagrams that show the preferred embodiments, structure, characteristics, and functions of the present invention to facilitate complete understanding thereof.

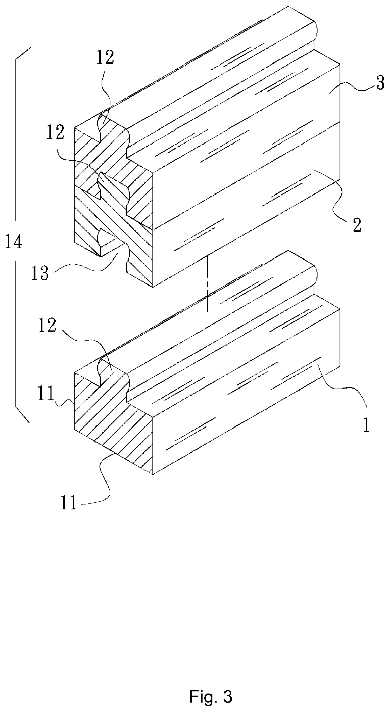

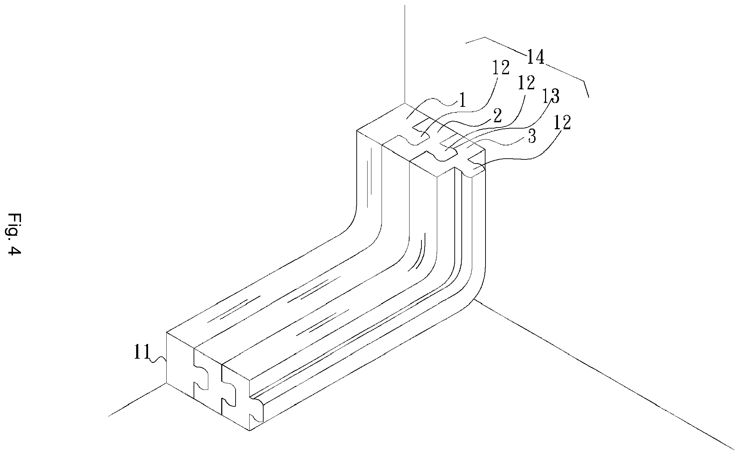

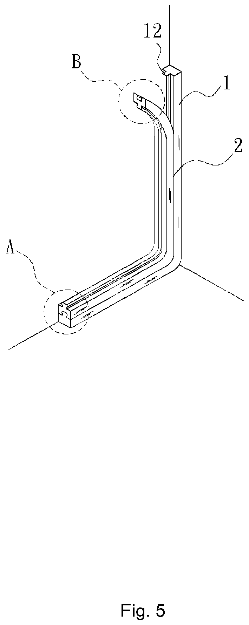

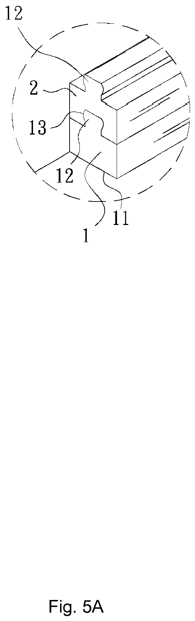

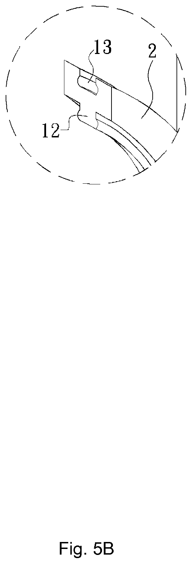

Referring to Figures 3 to 5B, wherein Figure 3 shows an exploded three-dimensional view of a combination cable mounting fixture structure according to the present invention, which shows a first cable unit, a second cable unit, and a third cable unit; Figure 4 shows an assembled three-dimensional schematic view of the combination cable mounting fixture structure according to the present invention, which shows a plurality of the cable units assembled to form the cable organizer structure; and Figure 5 shows another assembled three-dimensional schematic view of the combination cable mounting fixture structure according to the present invention, which shows a female head connecting portion of the second cable unit connected to an adjacent male head connecting portion of the first cable unit. Figure 5A shows a partial expanded schematic view according to portion A depicted in Figure 5; Figure 5B shows a partial expanded schematic view according to portion B depicted in Figure 5.

It can be clearly seen from the drawings that the combination cable mounting fixture structure of the present invention is able to efficiently organize cables, moreover, the fixing structure can easily and without limit be additionally installed with multiple cable units (such as: a first cable unit 1, a second cable unit 2, a third cable unit 3, a fourth cable unit, and so on). The so-called "combination" aspect of the present invention refers to a cable organizer structure 14 of the present invention that is able to without limit combine multiple cable units to form a single body (as shown in Figures 4 and 5), thereby enabling the user to make adaptations according to actual circumstances. The cable organizer structure 14 is not limited to the number of cable units, and is hereby first explained.

The present invention provides a combination cable mounting fixture structure, wherein the fixing structure comprises: multiple cable units, which are at least distinguished as the first cable unit 1 and the second cable unit 2. The definition of the first cable unit 1 of the present invention is that it can serve as a cable organizer base, wherein the first cable unit 1 is provided with at least one joining surface 11, which can be selected to be used for fixing to a flat surface (as shown in Figures 4 and 5) or can be used without fixing to any surface. Furthermore, suitable surfaces for the flat surface include a horizontal surface, a vertical surface, an inclined surface, and a wall angle area, and examples of surfaces include a ground surface, a wall surface, a ceiling, a tabletop, and the like.

Each of the cable units described in the present invention is provided with at least a male head connecting portion 12, or a female head connecting portion 13, or is provided with both a male head connecting portion 12 and a female head connecting portion 13 (as shown in Figure 3); however, the present invention is not limited to such configurations. When the female (male) head connecting portion 13 (12) of the second cable unit 2 is connected to the adjacent male head connecting portion 12 of the first cable unit 1, then the cable units 1, 2 are made to mutually form a parallel configuration and combine to form a cable organizer structure 14 (as shown in Figures 4 and 5).

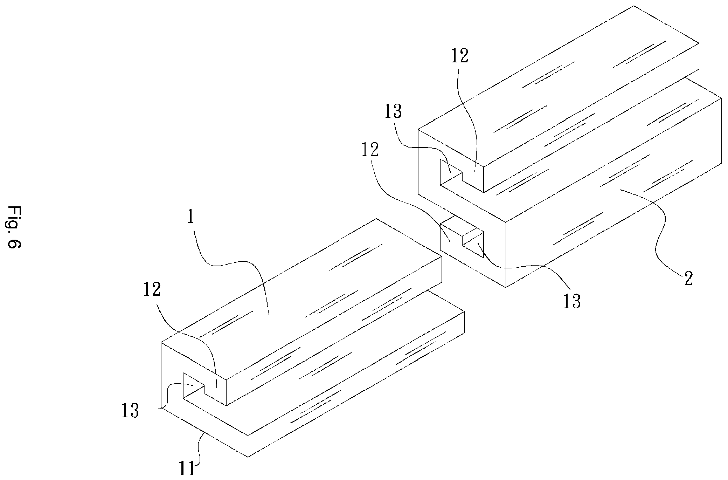

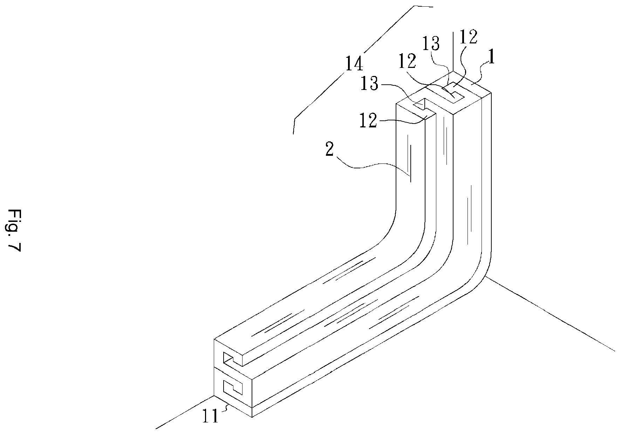

Referring to Figures 6 and 7, wherein Figure 6 shows another exploded elevational schematic view of the combination cable mounting fixture structure according to the present invention, which shows an adjacent area of a female head connecting portion of the second cable unit provided with a male head connecting portion of the first cable unit. Figure 7 shows an assembled three-dimensional schematic view of Figure 6, which shows the first cable unit and a second cable unit mutually combined to form a parallel configuration and assembled to form the cable organizer structure.

The shape of the male head connecting portion 12 described in the present invention is not limited by shape, however, the form must be of a convex structure. Similarly, the shape of the female head connecting portion 13 must match that of the male head connecting portion 12, and be of the form of a concave structure (as shown in Figure 6). Regarding the cross-sectional shape of the first cable unit 1 and the second cable unit 2, the present invention is not limited to such shapes (as shown in Figure 6). However, in order to achieve a comparatively tight, preferred connecting effect between the male and female head connecting portions 12, 13, the dimensions of the convex structure of the male head connecting portion 12 is preferably slightly bigger (wider) than the dimensions of the entrance area of the concave structure of the female head connecting portion 13, thereby enabling achieving a tight, mutually combined parallel configuration between the first cable unit 1 and the second cable unit 2, and composing the cable organizer structure 14 (as shown in Figure 7).

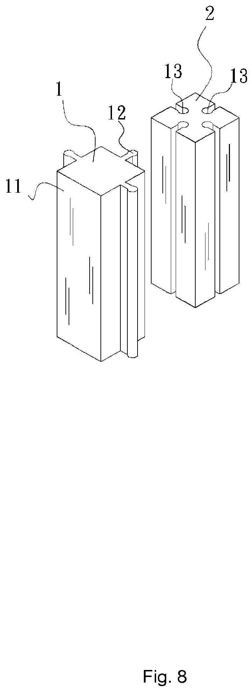

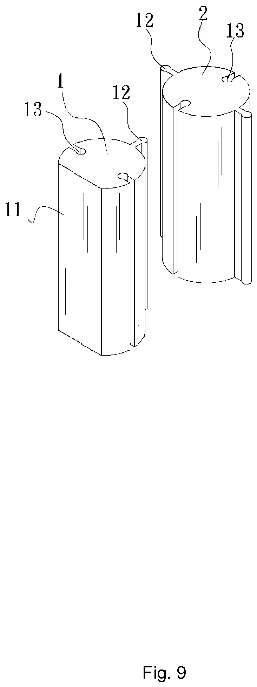

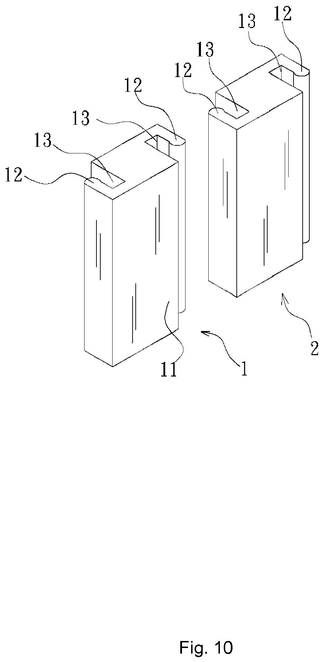

Referring to Figures 8 to 10, wherein Figure 8 is a three-dimensional cross-sectional schematic view 1 of a first and a second cable unit of the combination cable mounting fixture structure according to the present invention, which shows the sides of the first cable unit 1 provided with the male head connecting portions 12, and the sides of the second cable unit 2 provided with the female head connecting portions 13. Figure 9 is a three-dimensional cross-sectional schematic view 2 of a first and a second cable unit of the combination cable mounting fixture structure according to the present invention, which shows the first cable unit 1 and the second cable unit 2 provided with a staggered configuration of the male and female head connecting portions 12, 13, respectively. Figure 10 is a cross-sectional schematic view 3 of a first or a second cable unit of the combination cable mounting fixture structure according to the present invention, which shows the two sides of the first cable unit and the second cable unit all configured with the male head connecting portion 12, moreover, the female head connecting portion 13 is configured at an adjacent area of the male head connecting portion 12.

The present invention is not limited by the cross-sectional shape of the first cable unit 1 or the second cable unit 2, and is not limited by the number of the male head connecting portions 12 or the female head connecting portion 13 provided on the first cable unit 1 and the second cable unit 2, respectively. In other words, suitable embodiments of the present invention include the first cable unit 1 or the second cable unit 2 being, at the same time, respectively configured with a plurality of the male head connecting portions 12 and the female head connecting portions 13 (as shown in Figure 8), or the first cable unit 1 or the second cable unit 2 are staggered with the male and the female head connecting portions 12, 13, respectively (as shown in Figure 9), or two sides of the first or the second cable units 1, 2 are at the same time configured with the male head connecting portion 12 and an adjacent area of the male head connecting portion 12 is configured with the female head connecting portion 13 (as shown in Figure 10).

The second cable unit 2 and the third cable unit 3 (as shown in Figures 3 and 4) are produced using good resilient material, and taking into consideration both cost and material characteristics, materials such as plastic with a relatively good elastic force can be used. Moreover, the interior of the second cable unit 2 or the third cable unit 3 is able to contain at least one core cable, that is, a core cable such as a power supply cable or a signal cable, but is not limited to such cables.

In the present invention, it is hereby particularly described that the aforementioned description of the male head connecting portions 12 and the female head connecting portions 13 can be mutually exchanged to achieve the equivalent function, that is, what was originally the male head connecting portion 12 can be equivalently replaced by the female head connecting portion 13, and what was originally the female head connecting portion 13 can be equivalently replaced by the male head connecting portion 12, with the remaining structure and characteristics being identical. Hence, because those provided with general knowledge of the field of the invention are able to easily interpret such, the applicant will not further describe the details and will not provide a description of the drawings herein.

Circumstances regarding application of the aforementioned structure and constructional design according to the present invention are described below. It can be clearly seen from the drawings that during actual use of the combination cable mounting fixture structure of the present invention, when the user wants to use the present invention to efficiently achieve organizing cables while being able to achieve the effectiveness to easily and conveniently install additional cable units, the user need only first fix the first cable unit 1 to a flat surface, such as the ground or a wall surface, and after firmly fixing the first cable unit 1, because one side of the first cable unit 1 comprises the male head connecting portion 12, the female head connecting portion 13 of the second cable unit 2 need only be aligned with and pressed onto the male head connecting portion 12 of the first cable unit 1. Further connections may be deduced accordingly. For example, similarly, the female head connecting portion 13 of the third cable unit 3 is aligned with and pressed onto the male head connecting portion 12 of the second cable unit 2, thereby forming the cable organizer structure 14. Accordingly, the cable organizer structure 14 is formed and fixed to a flat surface.

When the user wants to install additional cables to the cable organizer structure 14, they only need to proceed with the same method as above, namely connect the female head connecting portion 13 of the other second cable unit 2 to the corresponding male head connecting portion 12 of the second cable unit 2. Hence, the connecting method of the present invention eliminates the considerable trouble of disassembling all the arranged cables required by the prior art. Accordingly, the present invention indeed enables the user to easily and conveniently install additional cables.

Accordingly, referring to all the attached diagrams, compared to the prior art, the present invention has the following advantages when in use: the combination cable mounting fixture structure of the present invention is able to efficiently organize cables while easily and conveniently enabling the installation of additional cables.

## Claims

1. A combination cable mounting fixture structure, wherein the fixing structure comprises: multiple cable units that are at least distinguished as first cable units 1 and second cable units 2; the first cable unit 1 is optionally fixed or not fixed to a flat surface, and each of the cable units is provided with at least a male head connecting portion 12, or at least a female head connecting portion 13 or is provided with both a male head connecting portion 12 and a female head connecting portion 13; the female (male) head connecting portion 13 (12) of the second cable unit 2 is connected to the adjacent male (female) head connecting portion 12 (13) of the first cable unit 1, thereby enabling the cable units to mutually form a parallel configuration, and combine to form the cable organizer structure 14.

2. The combination cable mounting fixture structure according to claim 1, wherein the flat surface is a horizontal surface, a vertical surface, an inclined surface, or a wall angle area.

3. The combination cable mounting fixture structure according to claim 1, wherein the first cable unit 1 is a cable organizer base.

4. The combination cable mounting fixture structure according to claim 1, wherein the interior of the first cable units 1 and the second cable units 2 serves as a covering for power supply or signal transmission core cables.

5. The combination cable mounting fixture structure according to claim 1, wherein the male head connecting portions 12 are convex structure and the female head connecting portions 13 are concave structure.

6. The combination cable mounting fixture structure according to claim 1, wherein the convex structure of the male head connecting portions 12 are slightly larger (wider) than the entrance of the concave structure of the female head connecting portions 13.

7. The combination cable mounting fixture structure according to claim 1, wherein the adjacent area of the male head connecting portions 12 are provided with the female head connecting portions 13.

8. The combination cable mounting fixture structure according to claim 1, wherein the male head connecting portions 12 and the female head connecting portions 13 are provided in a staggered configuration on the cable units.

9. The combination cable mounting fixture structure according to claim 1, wherein the male head connecting portions 12 are provided on the first cable unit 1 or the second cable unit 2, moreover, the female head connecting portions 13 are provided on the second cable unit 2 or the first cable unit 1.
